# EUROPEAN PATENT APPLICATION

(11) **EP 1 531 632 A2**
(43) Date of publication of application: **18.05.2005**
(21) Application number: 04026918.5
(22) Date of filing: 12.11.2004
(51) Int. Cl.: H04N 13/04

(54) **Stereoscopic two-dimensional image display system and image display method**

(30) Priority: 12.11.2003 JP 2003382940
(71) Applicant: Pioneer Corporation, Meguro-ku, Tokyo (JP)
(72) Inventor: Tomisawa, Isao, Tokorozawa-shi Saitama (JP); Ishikawa, Masaru, Tokorozawa-shi Saitama (JP)
(74) Representative: Reinhard - Skuhra - Weise & Partner

(57) **Abstract**

An image display apparatus is constituted by a display unit having an image display surface for displaying a two-dimensional image; and an image transmission panel which focuses light emitted from the image display surface by a microlens array disposed so as to be separated from the image display surface thereby to display a two-dimensional image stereoscopically. A plurality of the image display apparatuses are disposed so that the image display surfaces form a predetermined angle between the adjacent ones. A shielding member is disposed at a non-visible area outside of the visible area of a stereoscopic two-dimensional image displayed by each of the image transmission panels.

## Description

### BACKGROUND OF THE INVENTION

The present invention relates to a stereoscopic two-dimensional image display system and an image display method for displaying a two-dimensional image stereoscopically.

In recent years, in devices such as an interior decoration equipment, a sales promotion display, a communication terminal device, a game device, various method of reproducing image information stereoscopically have been tried in order to improve realistic sensations, visibility and amusement property. In general, there is the binocular parallax as one of physiological causes for a person to stereoscopically view a subject. Although as a method of reproducing a stereoscopic image using the binocular parallax, there is the polarization method in which a viewer puts on polarized glasses and views left and right parallactic images based on different polarized states, respectively. However, this method has a drawback that it is troublesome for a viewer to put the polarized glasses on.

In contrast, there is the lenticular lens method as the stereoscopic image display method not using the polarized glasses. According to this method, a plurality of images are made latent in a screen, a person views the plurality of images through a transparent screen which is formed by coupling semicolumnar lenses each having a constant width in a horizontal direction, thereby making it possible to view a stereoscopic image and a motion image. That is, each of the plurality of images is divided in a stripe manner in the vertical direction and the images thus divided are disposed regularly in correspondence with each pitch of the semicolumnar lenses, thereby realizing the stereoscopic viewing in accordance with the focusing positions of the lenses each of which changes depending on the viewing direction of the screen and the distance from the screen and also in accordance with the viewing states of the images thus disposed. To be concretely, at the time of reproducing a stereoscopic image, a pair of striped images arranged alternately as right and left parallax images corresponding to right and left eyes of the viewer are supplied to the right and left eyes of the viewer through the lenticular lens thereby to make the viewer recognize the stereoscopic image (see JP-A-10-221644, for example).

According to this method, in order to make the plurality of images latent in a screen, the parallax images corresponding to the right and left eyes of the viewer are required at the photographing stage. In order to supply the parallax images, many works are required such as a computer image processing, a design processing of the lenticular lens, an accurate assembling processing between the lens and the images. Thus, a disply for displaying a stereoscopic two-dimensional image using the lenticular lens tends to become expensive.

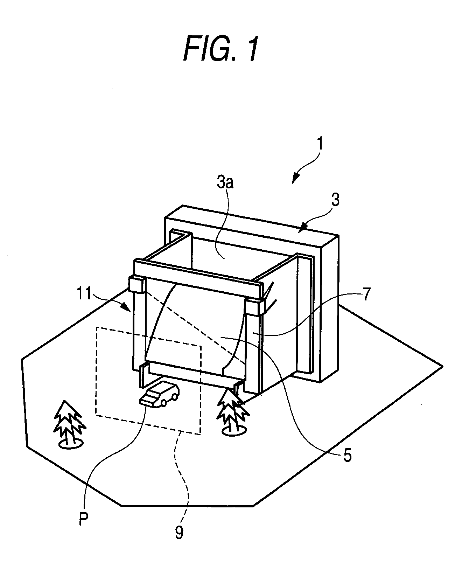

As an apparatus for eliminating such a problem, there is proposed an image display apparatus which images a two-dimensional image as a real image by using a microlens array, thereby displaying a stereoscopic two-dimensional image with a simple configuration. As shown in Fig. 1, the image display apparatus 1 is constituted by a display unit 3 for displaying a two-dimensional image including a stereoscopic image on an image display surface 3a of a planer shape; and an image transmission panel 11 configured by a microlens array 5 disposed separately from and in parallel to the image display surface 3a and a lens frame area 7 for surrounding the effective area of the microlens array 5. The micro lens array is formed by a plurality of lenses and has an effective area larger than a stereoscopic image within a two-dimensional image. The image transmission panel generates an imaging surface 9 of a real image P of a two-dimensional image in a space positioned at an opposite side of the display unit 3 thereby to display a stereoscopic two-dimensional image. According to the image display apparatus 1 thus configured, it is possible to display stereoscopically a two-dimensional image including a stereoscopic image with a very simple configuration. Further, according to this image display apparatus, it is not necessary to use polarized glasses and the resolution of a stereoscopic image can not be degraded.

However, although the aforesaid image display apparatus 1 can display stereoscopically a two-dimensional image including a stereoscopic image with the simple configuration, a visible angle of a stereoscopic image is small and an image is displayed on a single display unit 3, so that it is impossible to form a visible area in a wide range. In contrast, it is considered to dispose a plurality of the image display apparatuses 1 to form a visible area of a wide range. However, in this case, a non-visible area (a blind spot or a dead area where a real image P can not be seen) outside of the visible area appears between adjacent ones of a plurality of the visible areas of the plurality of the image display apparatuses 1 thereby to interrupt an image. Thus, since the visible area does not continue, an integrated visible area can not be formed in a wide range. As a result, it is difficult to naturally display a stereoscopic two-dimensional image and so it can not obtain realistic sensations, visibility and amusement property sufficiently.

### SUMMARY OF THE INVENTION

A problem to be solved in the invention is such that it is difficult to naturally display a stereoscopic two-dimensional image and so it can not obtain realistic sensations, visibility and amusement property sufficiently.

In order to solve the aforesaid problem, the stereoscopic two-dimensional image display system according to a first aspect off the invention is characterized in that the system including: an image display apparatus including a display unit having an image display surface for displaying a two-dimensional image, and an image transmission panel which focuses light emitted from the image display surface on an imaging surface in a space positioned on a side of a microlens array opposing to the display unit thereby to display a two-dimensional image; and shielding members each disposed at a non-visible area outside of a visible area of the stereoscopic two-dimensional image displayed by the image transmission panel of corresponding one of a plurality of the image display apparatuses.

Further, according to a second aspect of the invention, there is provided an image display method including: disposing a plurality of image display apparatuses in a manner that image display surfaces form a predetermined angle between adjacent ones thereof, each of the image display apparatus including a display unit having the image display surface for displaying a two-dimensional image, and an image transmission panel which focuses light emitted from the image display surface on an imaging surface in a space positioned on a side of a microlens array opposing to the display unit thereby to display a two-dimensional image; disposing each of shielding members at a non-visible area outside of a visible area of the stereoscopic two-dimensional image displayed by the image transmission panel of corresponding one of a plurality of the image display apparatuses; and displaying the stereoscopic two-dimensional image including the shielding members as a constituent element thereof on the image transmission panels.

### BRIEF DESCRIPTION OF THE DRAWINGS

These and other objects and advantages of this invention will become more fully apparent from the following detailed description taken with the accompanying drawings in which:
Fig. 1 is a perspective view showing the schematic configuration of a conventional image display apparatus;
Fig. 2 is a perspective view showing the schematic configuration of the stereoscopic two-dimensional image display system according to the invention;
Fig. 3 is a sectional diagramof the image display apparatus shown in Fig. 2;
Fig. 4 is a sectional diagram of a part of the micro lens array shown in Fig. 3;
Fig. 5 is a diagram showing the configuration of the stereoscopic two-dimensional image display system in which the image transmission panels are disposed in the left and right directions;
Fig. 6 is a diagram for explaining the relative positional relation between a shielding member and a non-visible area; and
Fig. 7 is a diagram showing the configuration of the modified example of the stereoscopic two-dimensional image display system in which the image transmission panels are disposed in the vertical direction.

### DETAILED DESCRIPTION OF THE PREFERRED EMBODIMENTS

Hereinafter, a preferred embodiment of a stereoscopic two-dimensional image display system and an image display method according to the invention will be explained with reference to the drawings.

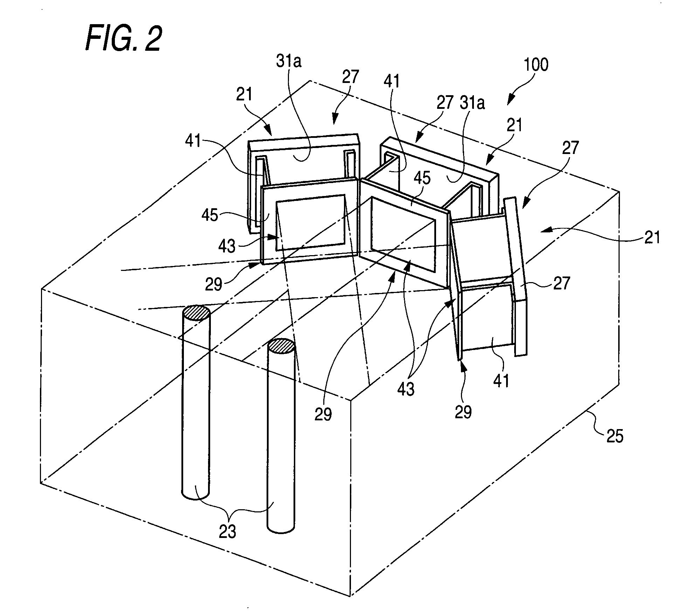

Fig. 2 is a perspective view showing the schematic configuration of the stereoscopic two-dimensional image display system according to the invention.

A stereoscopic two-dimensional image display system 100 according to the embodiment includes a plurality of image display apparatuses 21 and a plurality of shielding members 23, as main constituent members. In this embodiment, the three image display apparatuses 21 are provided. Thus, two non-visible areas described later are formed. The two shielding members 23 are provided in correspondence to the non-visible areas. In the stereoscopic two-dimensional image display system according to the invention, the number of the image display apparatuses 21 may be two or plural equal to or more than three. In this case, in correspondence to the number n-1 of the non-visible areas formed in correspondence to the number n of the image display apparatuses 21, the same number n-1 of the shielding members 23 are provided. In this figure, although a reference numeral 25 depicts a phantom line representing a stage space for displaying a stereoscopic two-dimensional image, the phantom line may represent the casing of a display apparatus in which a display space is made small.

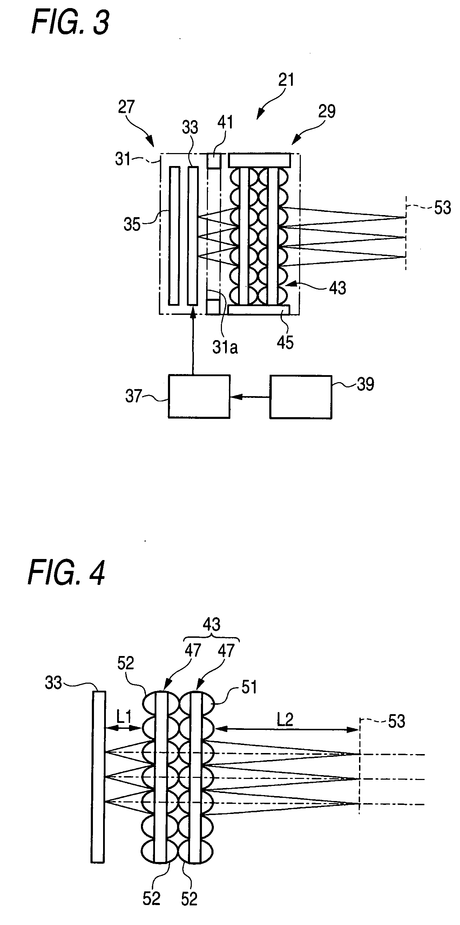

Fig. 3 is a sectional diagramof the image display apparatus shown in Fig. 2.

The image display apparatus 21 is mainly constituted by a display unit 27 and an image transmission panel 29. The display unit 27 includes a color liquid crystal display apparatus (LCD) 31 as a main constituent member, for example. The LCD 31 has an image display surface 31a of a planer shape for displaying a two-dimensional image including a stereoscopic image. The LCD 31 is provided with a flat color liquid crystal panel 33 of the image display surface 31a, a back light illumination unit 35 and a color liquid crystal driving circuit 37. The color liquid crystal driving circuit 37 is coupled to an image signal supply unit 39 which supplies an image signal for a two-dimensional image including a stereoscopic image. In the display unit 27, a cathode ray tube, a plasma display, an organic electroluminescence display etc., for example, may be used in place of the LCD 31.

Supporting members 41 are fixed at the peripheral edges of the LCD 31. The supporting members 41 support the image transmission panel 29. The image transmission panel 29 is constituted by a microlens array 43 and a lens frame member 45 which surrounds the effective area of the microlens array 43. The supporting members 41 support the lens frame member 45 thereby to dispose the image transmission panel 29 so as to separate from and be in parallel to the image display surface 31a of the color liquid crystal panel 33.

The effective area of the microlens array 43 is set to be same as the area of the image display surface 31a of the color liquid crystal panel 33. The lens frame member 45 exhibits a dark color such as black thereby to suppress the degree of the presence of the microlens array 43 as to which a viewer is conscious.

Fig. 4 is a sectional diagram of a part of the micro lens array shown in Fig. 3.

The microlens array 43 is constituted by a plurality of micro lenses disposed in a two-dimensional manner. The microlens array 43 is a micro convex lens plate which is formed by integrating two lens array halves 47 as one set. In the micro convex lens plate, a plurality of lens systems, each formed by a pair of the convex lenses which optical axes are made concentric, are disposed in a two-dimensional manner so that the optical axes thereof are in parallel from one another.

Each of convex lenses 51 formed on the right side surface of the lens array half 47 on the right side in Fig. 4 is formed to have a curvature larger than that of each of other convex lenses 52. Thus, a distance L2 between the image side focus point (an imaging surface 53) of the lens array half 47 on the right side in this figure and the lens surface is longer than a distance L1 between the color liquid crystal panel 33 of the lens array half 47on the left side in this figure and the lens surface. Thus, the imaging surface 53 is sufficiently separated from the image transmission panel 29 and further the depth of the image display apparatus 21 is made compact.

When the microlens array 43 is disposed in parallel to the front surface of the display unit 27 and at a position away from the display unit by almost the imaging distance L1 of the convex lenses 52, the microlens array projects an image displayed on the display unit 27 on the imaging surface 53 separated by the imaging distance L2 from the surface of the micro lens array on the opposite side of the display unit 27. Although an image thus projected is a two-dimensional image, when the image is one making a viewer feel depth (stereoscopic), the image is displayed as being floated in the forward direction in a space. Thus, a viewer can view the image as if a stereoscopic image is displayed. Hereinafter, a two-dimensional image displayed on the imaging surface 53 is called as a stereoscopic two-dimensional image.

Although a two-dimensional image displayed on the display unit 27 is once inverted when passing through one of the lens array halves 47, the two-dimensional image thus inverted is again inverted when passing the other of the lens array halves 47. Thus, the image transmission panel 29 can display the two-dimensional image being displayed on the display unit 27, on the imaging surface 53 as an erect stereoscopic two-dimensional image.

In the aforesaid embodiment, although the microlens array 43 is configured by the micro convex lens plate which is formed by integrating the two lens array halves 47 as the one set, the present invention is not limited thereto and the microlens array may be configured by the micro convex lens plate which is formed by a single lens array half as the one set. In this case, since a two-dimensional image being displayed on the display unit 27 is displayed on the image transmission panel 29 in an inverted manner as described above, preferably, an image signal supply unit 63 inverts an image signal in advance and supplies the image signal thus inverted to the unit 33.

When the micro convex lenses are allocated in one-to-one relation to display pixels provided at the image display surface 31a of the display unit 27, respectively, a two-dimensional image can not be displayed on the image transmission panel 29 in an inverted manner, there arises no problem even when only one lens array half 47 is disposed as the one set.

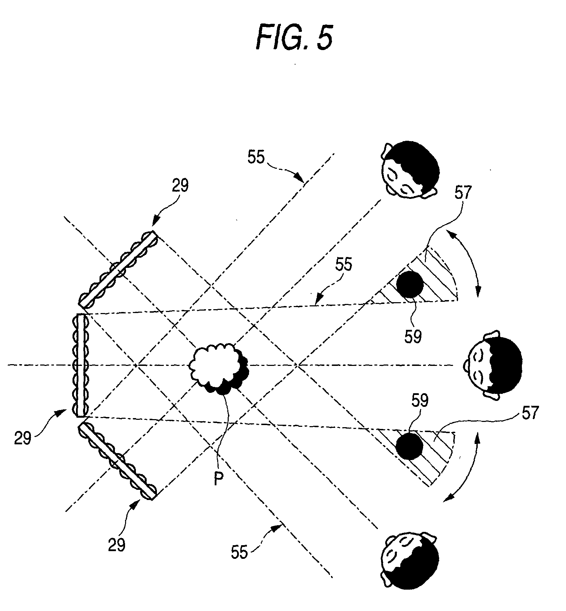

Fig. 5 is a diagram showing the configuration of the stereoscopic two-dimensional image display system in which the image transmission panels are disposed in the left and right directions.

In the stereoscopic two-dimensional image display system 100, a plurality of the image display apparatuses 21 are disposed. These image display apparatuses 21 are disposed in a manner that the image display surfaces 31a form a predetermined angle between the adjacent ones thereof. That is, the image display apparatuses 21 at the both sides are disposed so as to form the predetermined angle of 180 degrees or less in a manner that the imaging distance L2 of each of the image display apparatuses at the both sides coincides with the imaging distance L2 of the image display apparatus 21 at the center portion. Thus, a visible area 55 larger than the visible area 55 of a stereoscopic two-dimensional image obtained by the single image display apparatus 21 can be formed.

According to this embodiment, the three image display apparatuses 21 are disposed in the left and right directions of a stereoscopic two-dimensional image P which is displayed by the image transmission panels 29. Thus, a stereoscopic two-dimensional image, which causes realistic sensations by securing the visible area 55 of a wide range in the horizontal direction (for example, a field of sea, a wide plane, images of left, front and right planes of an object in the three-dimensional CAD), can be effectively displayed and the stereoscopic two-dimensional image can be changed in accordance with the viewing direction.

When a plurality of the image display surfaces 31a are disposed so as to form the predetermined angle between the adjacent ones in this manner, a non-visible area 57 outside of the visible area 55 is formed between the adjacent ones of the visible areas 55 of the image display surfaces 31a. In the stereoscopic two-dimensional image display system 100 according to the embodiment, a shielding member 59 is disposed at each of the non-visible areas 57.

The shielding members 59 are a constituent element of the stereoscopic two-dimensional image P displayed by the image transmission panels 29. Thus, the shielding members are preferably harmonized and integrated with the stereoscopic two-dimensional image P but may not be limited to such a case. As an example of the integration, for example, when the stereoscopic two-dimensional image P is a forest, the shielding members 59 may be trees, and further a fairy may be displayed in the stereoscopic two-dimensional image P such that the fairy appears at and disappears from the trees. Further, when the stereoscopic two-dimensional image P is a palace, the shielding members 59 may be columns or pillars, and further a person may be displayed in the stereoscopic two-dimensional image P such that the person appears at and disappears from the columns. Thus, the relationship between the stereoscopic two-dimensional image P and the shielding members 59 can be enhanced thereby to eliminate incongruity due to the presence of the shielding members 59. Further, the system is not arranged in a manner that the stereoscopic two-dimensional image P can not be viewed since it is out of the visible area 55 but arranged so as to feel a viewer that the stereoscopic two-dimensional image can not be viewed since it is shielded by the shielding member 59, thereby displaying the stereoscopic two-dimensional image P more naturally so as not to feel a viewer about the presence of the non-visible areas 57. Each of the shielding members 59 is not limited to an opaque member which completely shields light but may be a transparent glass, transparent plastics, or a meshed-shape member. That is, preferably, a member more naturally harmonized with the stereoscopic two-dimensional image P is employed as the shielding member.

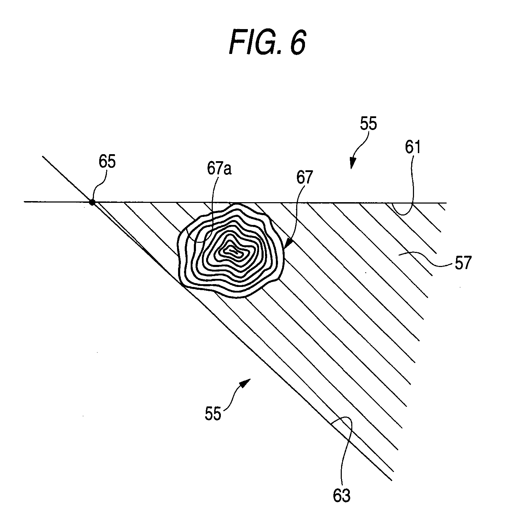

Fig. 6 is a diagram for explaining the relative positional relation between the shielding member and the non-visible area.

The non-visible area 57 is formed by being sandwiched between boundary planes 61, 63 of the two adjacent visible areas 55 which cross to each other. In this case, the shielding member 59 is a columnar member 67 extending along the intersection line (a line extending in the direction orthogonal to the sheet plane passing through a point 65 in Fig. 6) of the two boundary planes 61, 63. Further, the sectional contour 67a of the columnar member 67 preferably contacts with the two boundary planes 61, 63. Thus, the entirety of the non-visible area 57 can be covered by the columnar member 67 and further the columnar member 67 is prevented from protruding into the visible area 55. Accordingly, such a phenomenon can be prevented from occurring that the columnar member 67 protrudes into the visible area 55 to narrow the visible area 55. Thus, the visible area 55 of the maximum size can be formed by using the shielding member 59 of the minimum size.

Next, the operation of the stereoscopic two-dimensional image display system configured in this manner will be explained.

When the stereoscopic two-dimensional image display system 100 is driven so as to display an image, since the lens frame members 45 exhibit black, the supporting members 41 can be shielded from the viewing side. When a two-dimensional image is formed on the image display surfaces 31a of the image display apparatuses 21, the two-dimensional image is focused on the image side imaging surface, so that the real image of the stereoscopic two-dimensional image P can be viewed from almost optical axis direction.

In a two-dimensional image including a stereoscopic image to be displayed, according to the known image signal processing method for cutting and dividing an image signal depending on a luminance level and a color level, when an image such as a background other than the stereoscopic image is a two-dimensional image of a dark color such as black, the supporting members 41 etc. exhibit black. Thus, a viewer can recognize that only a real image to be displayed is floated in the forward direction as if the displayed image is a three-dimensional image. Preferably, an image to be displayed as a stereoscopic image is a moving member such as a moving animal or a vehicle rather than a static member.

In this case, when the same image is displayed on each of the image display apparatuses 21, an integrated visible area of a wide range can be formed, whereby the same image can be viewed from the wide range of direction.

On the other hand, when a two-dimensional image viewed from the front direction is displayed on the center image display apparatus 21 and two-dimensional images obtained by viewing the two-dimensional image displayed on the center image display apparatus 21 from the right and left directions are displayed on the right and left image display apparatuses 21, respectively, the front face and the left and right side faces of a stereoscopic two-dimensional image P can be viewed from the wide range of direction.

Further, a two-dimensional image including the shielding member 59 as a constituent element is displayed on each of the image display apparatuses 21, and the stereoscopic two-dimensional image P is displayed on the imaging surface 53 by means of the image transmission panel 29.

Thus, according to the image display method thus configured, since the stereoscopic two-dimensional image P including the shielding members 59 as a constituent element is displayed on the imaging surfaces 53, the non-visible areas 57 can be covered by the shielding members 59, thereby making a viewer perceive as if the stereoscopic two-dimensional image P is hidden behind the shielding members 59. Accordingly, the integrated visible areas 55 of a wide range can be formed by continuously disposing a plurality of the visible areas 55. Further, the relationship between the stereoscopic two-dimensional image P and the shielding members 59 can be enhanced thereby to eliminate incongruity due to the presence of the shielding members 59. Thus, the stereoscopic two-dimensional image P can be displayed more naturally.

Further, according to the stereoscopic two-dimensional image display system 100 described above, since the shielding members 59 are disposed at the non-visible areas 57 which are caused by disposing a plurality of the image display apparatuses 21 so that the display units 27 form the predetermined angle between the adjacent ones thereof, the non-visible areas 57 can be covered by the shielding members 59, respectively, thereby making a viewer perceive as if the stereoscopic two-dimensional image P is hidden behind the shielding members 59. Accordingly, the integrated visible areas 55 of a wide range can be formed by continuously disposing a plurality of the visible areas 55. As a result, the stereoscopic two-dimensional image P with realistic sensations can be displayed more naturally, thereby improving visibility and amusement property.

Next, the explanation will be made as to a modified example of the stereoscopic two-dimensional image display system according to the invention.

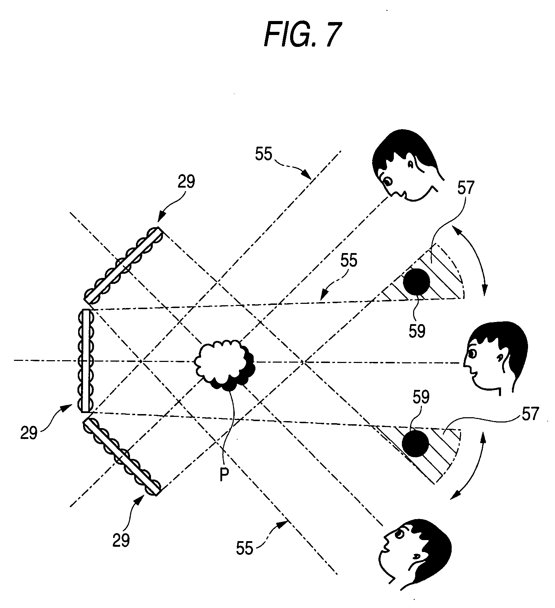

Fig. 7 is a diagram showing the configuration of the modified example of the stereoscopic two-dimensional image display system in which the image transmission panels are disposed in the vertical direction.

In this stereoscopic two-dimensional image display system, a plurality of the image display apparatuses 21 are disposed in the vertical direction of a stereoscopic two-dimensional image P displayed by the image transmission panels 29 Other configuration in this modified example is same as the stereoscopic two-dimensional image display system 100 described above.

Thus, according to the modified example, since the integrated visible areas 55 of a wide range can be secured in the vertical direction, the stereoscopic two-dimensional image P capable of causing realistic sensations (for example, night sky, a high-rise building) can be displayed effectively.

In the aforesaid example, although the explanation is made as to the case where the sectional contour 67a of the shielding member 59 contacts with the boundary planes 61, 63, the stereoscopic two-dimensional image display system according to the invention may be arranged in a manner that the sectional contour 67a of the shielding member 59 protrudes into the visible areas 55 or there is a clearance between the shielding member 59 and the boundary planes 61, 63 so long as the protrusion amount or the clearance is small (a degree not causing unnatural feeling).

Further, in the aforesaid example, although the explanation is made as to the case where a plurality of the image display apparatuses 21 are provided. The stereoscopic two-dimensional image display system according to the invention may be arranged in a manner that only a single image display apparatus 21 is provided and the shielding members 59 are provided in adjacent to and at the outer sides of the boundary planes 61, 63 of the visible area 55, respectively. In this case, also since the shielding members 59 are formed as a constituent element of the stereoscopic two-dimensional image P, the relationship between the stereoscopic two-dimensional image P and the shielding members 59 can be enhanced thereby to eliminate incongruity due to the presence of the shielding members 59. Thus, the stereoscopic two-dimensional image P can be displayed more naturally.

Incidentally, the display unit 27, the imaging surface 53 and the microlens array 43 shown in the embodiment are not necessarily disposed in parallel from one another.

## Claims

1. A stereoscopic two-dimensional image display system comprising:
an image display apparatus including a display unit having an image display surface for displaying a two-dimensional image, and an image transmission panel which focuses light emitted from the image display surface on an imaging surface in a space positioned on a side of a microlens array opposing to the display unit thereby to display a two-dimensional image; and
shielding members each disposed at a non-visible area outside of a visible area for the stereoscopic two-dimensional image displayed by the image transmission panel of corresponding one of a plurality of the image display apparatuses.

2. The stereoscopic two-dimensional image display system according to claim 1, wherein
the image display apparatuses are disposed in a manner that the image display surfaces form a predetermined angle between adjacent ones thereof.

3. The stereoscopic two-dimensional image display system according to claim 1, wherein
a plurality of the image display apparatuses are disposed in left or right directions of the stereoscopic two-dimensional image displayed by the image transmission panels.

4. The stereoscopic two-dimensional image display system according to claim 1, wherein
a plurality of the image display apparatuses are disposed in a vertical direction of the stereoscopic two-dimensional image displayed by the image transmission panels.

5. The stereoscopic two-dimensional image display system according to claim 1, wherein:
each of the non-visible areas is formed so as to be sandwiched between crossing boundary planes of corresponding adjacent two of the visible areas; and
each of the shielding members is a columnar member extending along an intersection line of the corresponding two boundary planes, and a sectional contour of the columnar member contacts with the corresponding two boundary planes.

6. An image display method comprising:
disposing a plurality of image display apparatuses in a manner that image display surfaces form a predetermined angle between adjacent ones thereof, each of the image display apparatus including a display unit having the image display surface for displaying a two-dimensional image, and an image transmission panel which focuses light emitted from the image display surface on an imaging surface in a space positioned on a side of a microlens array opposing to the display unit thereby to display a two-dimensional image;
disposing each of shielding members at a non-visible area outside of a visible area of the stereoscopic two-dimensional image displayed by the image transmission panel of corresponding one of a plurality of the image display apparatuses; and
displaying the stereoscopic two-dimensional image including the shielding members as a constituent element thereof on the image transmission panels.
